(19) Europäisches Patentamt / European Patent Office / Office européen des brevets

(11) **EP 2 068 661 B1**

(12) **EUROPEAN PATENT SPECIFICATION**

(45) Date of publication and mention
of the grant of the patent:
**22.05.2013 Bulletin 2013/21**

(21) Application number: **07841267.3**

(22) Date of filing: **23.08.2007**

(51) Int Cl.:
*A23L 1/30* (2006.01)        *A23L 1/305* (2006.01)
*A23L 1/015* (2006.01)       *A21D 2/16* (2006.01)
*A21D 2/24* (2006.01)        *A21D 2/26* (2006.01)
*C11B 5/00* (2006.01)

(86) International application number:
**PCT/US2007/076626**

(87) International publication number:
**WO 2008/024904 (28.02.2008 Gazette 2008/09)**

(54) **METHOD FOR SUPPRESSION OF FISHY AROMAS IN FOOD PRODUCTS BY PROTEINS**

VERFAHREN ZUR UNTERDRÜCKUNG VON FISCHGERÜCHEN IN LEBENSMITTELN DURCH PROTEINE

PROCEDE DESTINE A RETIRER LES AROMES DE POISSON DANS DES PRODUITS ALIMENTAIRES AU MOYEN DE PROTEINES

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **23.08.2006 US 823322 P**

(43) Date of publication of application:
**17.06.2009 Bulletin 2009/25**

(73) Proprietor: **Kellogg Company
Battle Creek, MI 49016-3599 (US)**

(72) Inventors:
• **GARTER, Barbara
Portage, MI 49024 (US)**
• **ZHOU, Shengying
Battle Creek, MI 49015 (US)**
• **BROWN, Alison
Woodstock, IL 60098 (US)**

(74) Representative: **Shanks, Andrew et al
Marks & Clerk LLP
Aurora
120 Bothwell Street
Glasgow
G2 7JS (GB)**

(56) References cited:
**EP-A- 1 593 312        EP-A- 1 600 496
EP-A- 1 665 940        WO-A-93/16595**

WO-A-2005/122791        CN-A- 1 560 024
DE-U1- 20 309 608        FR-A- 2 770 224
KR-A- 20030 053 484      US-A- 5 723 446
US-A1- 2006 083 824

• **DATABASE WPI Week 199826 Derwent
Publications Ltd., London, GB; AN 1998-289843
XP002150137 & JP 10 099048 A (SNOW BRAND
MILK PROD CO LTD) 21 April 1998 (1998-04-21)**
• **DATABASE FSTA [Online] INTERNATIONAL
FOOD INFORMATION SERVICE (IFIS),
FRANKFURT-MAIN, DE; JUREWICZ I ET AL: "Pro-
and antioxidant effects of some amino acids upon
fish oil" XP002464639 Database accession no.
73-3-08-n0471 & ZESZYTY PROBLEMOWE
POSTEPOW NAUK ROLNICZYCH, 1973, SEA
FISHERIES INST., GDYNIA, POLAND**
• **PENA-RAMOS E A ET AL: "WHEY AND SOY
PROTEIN HYDROLYSATES INHIBIT LIPID
OXIDATION IN COOKED PORK PATTIES", MEAT
SCIENCE, ELSEVIER SCIENCE, GB, vol. 64, no.
3, 1 July 2003 (2003-07-01), pages 259-263,
XP009062065, ISSN: 0309-1740, DOI:
10.1016/S0309-1740(02)00187-0**
• **TSUGITA, A. ; SCHEFFLER, J-J.: "A Rapid
Method for Acid Hydrolysis of Protein with a
Mixture of Trifluoroacetic Acid and Hydrochloric
Acid", EUROPEAN JOURNAL OF
BIOCHEMISTRY, vol. 124, 1982, pages 585-588,**

## Description

TECHNICAL FIELD

This invention relates generally to incorporation of oxidatively unstable fatty acids and oils into foods; and, more particularly, to a method to suppress the off aromas and tastes produced by oxidatively unstable oils and fatty acids, such as omega-3 polyunsaturated fatty acids, in foods.

BACKGROUND OF THE INVENTION

Long chain polyunsaturated fatty acids have been shown to be beneficial to human health. In particular, long chain polyunsaturated omega-3 fatty acids have been shown to be beneficial. The three long chain polyunsaturated fatty acids of primary interest are linolenic acid (18:3w-3), eicosapentaenoic acid (EPA) (20:5w-3), and docosahexaenoic acid (DHA) (22:6w-3). The health benefits associated with enhanced consumption of these omega-3 fatty acids include a lowering of serum cholesterol, reduction of blood pressure, reduction of the risk of heart disease, and a reduction of the risk of stroke. These omega-3 fatty acids are also essential to normal neuronal development and their depletion has been associated with neurodegenerative diseases such as Alzheimer's disease. In the human eye and retina the ratio of DHA:EPA is 5:1 and their presence is essential for normal eye development. The fatty acid DHA is also believed to be essential for optimal cognitive development in infants. Food fortified with DHA is often called "brain food" in Asian countries. Preliminary studies suggest that long chain polyunsaturated omega-3 fatty acids may play a role in mediating chronic inflammatory assaults and use of them by individuals with mild asthma is documented to reduce the severity of the histamine response in asthmatics.

There are several main sources of these beneficial long chain polyunsaturated omega-3 fatty acids. Certain plants provide an abundant source of linolenic fatty acid. Marine animals, such as fish and crustaceans, and marine plants, such as micro algae, are the main sources of DHA and EPA. In particular, fatty fish such as mackerel and salmon contain high levels of DHA and EPA. Marine micro algae contain predominantly DHA. Marine micro algae have an advantage as a source of DHA in that large volumes can be rapidly produced using modem methods and there is no need for the extensive acreage associated with fish farms or the difficulty of fishing. The omega-3 fatty acids are generally found in the form of triglycerides, i.e. one of more of the fatty acids connected to the glycerol backbone is an omega-3 fatty acid, and not in the form of free fatty acids. Both forms have the health benefits and the problems of oxidative instability. Therefore in this specification and the associated claims no distinction will be made between these two forms of omega-3 fatty acids. The term omega-3 fatty acid refers to both the free fatty acid form and the triglyceride form unless specifically noted otherwise. In this specification and the associated claims no distinction will be made between various sources of omega-3 fatty acids unless specifically noted.

The beneficial health effects of the omega-3 fatty acids, especially EPA and DHA, require relatively large amounts of the omega-3 fatty acids making it impractical to obtain the recommended daily amount by consuming fish. Thus, both EPA and DHA have been packaged together in caplet form. Consumers do not enjoy consuming the caplets because they are large and hard to swallow and the caplets can quickly develop an unpleasant fishy aroma and taste. Prior attempts to add DHA and/or EPA directly to food products have been unsuccessful because the unstable omega-3 fatty acids rapidly give rise to a fishy taste and aroma in the food product and make it unpalatable. It is believed that DHA and EPA are particularly unstable in the presence of water and high heat, this further complicates their use in food products. Unlike other fatty acids these omega-3 fatty acids can not be stabilized in foods merely by adding the typical antioxidants to the foods. Similarly other oils and fatty acids are also oxidatively unstable in foods and can give rise to off odors and tastes. Example of these unstable oils and fatty acids include: soybean oil, flaxseed oil, marine oil, marine micro algae, linoleic acid, linolenic acid, docosahexaenoic acid, and eicosapentaenoic acid.

It is desirable to provide a simple method to allow of incorporation of the omega-3 fatty acids into foods that does not involve complicated processing steps or the use of unique ingredients and that promotes the shelf life of the food product. Shelf life is defined as the length of time the food product can be stored without the development of fishy aromas or tastes.

EP 1 600 496 (Hayashibara Biochem) discloses a method for inhibiting the formation of unfavourable smells from fatty acids by using a relatively high molecular oligosaccharide.

SUMMARY OF THE INVENTION

In general terms, this invention provides a method of quenching aldehyde products of lipid autoxidation comprising the steps of: providing a partially hydrolyzed whey protein having a degree of hydrolysis of 26% or greater and a water activity of 0.308 or greater; exposing a food product containing lipids prone to autoxidation comprising at least one of docosahexaenoic acid or eicosapentaenoic acid to the partially hydrolyzed whey protein such that the aldehyde products released by the autoxidation are quenched by the partially hydrolyzed whey protein and the shelf life of the food product is extended to at least 12 weeks under storage conditions of 29.4°C (85°F) and 50% relative humidity. The invention further provides the method of claim 6 and food product of claim 12.

These and other features and advantages of this invention will become more apparent to those skilled in the art from the detailed description of a preferred embodiment. The drawings that accompany the detailed description arc described below.

BRIEF DESCRIPTION OF THE DRAWINGS

Figure 1 shows the quenching capability of a series of partially hydrolyzed whey protein isolates on test aldehydes plotted as quenching capability versus degree of hydrolysis; and
Figure 2 shows the effect of the water activity of a partially hydrolyzed whey protein isolate on its ability to quench the test aldehydes.

DETAILED DESCRIPTION OF A PREFERRED EMBODIMENT

As discussed marine animals and marine plants are the main sources of EPA and DHA. The use of fish oils or marine oils as a source of EPA and DHA are well known. Recently, a number of manufacturers have developed highly efficient processes for growing marine micro algae. These micro algae are a source for EPA and DHA at high yields and in a sustainable fashion. One source of micro algae derived EPA and DHA is Martek Biosciences Corporation, Columbia, MD, USA. A second source is Nutrinova Nutrition Specialties and Food Ingredients, DE. The EPA and DHA extracted from these sources are in the form of triglycerides. The omega-3 fatty acids can be provided as a free flowing powder or they can be supplied in the form of oils for the present invention. Typically the omega-3 fatty acids are encapsulated, a free flowing powder, or an oil mixture. One omega-3 fatty acid containing oil preparation is designated as HM by Martek Biosciences Corp. which has approximately 30 to 35% DHA. Martek also supplies a powder containing omega-3 fatty acids designated as Martek DHA(™) powder KS35. In the present specification and claims either Martek source can be used as can the sources of other and unless specifically noted no distinction is made between the two forms.

Most attempts in the past to incorporate omega-3 fatty acids into foods have concentrated on developing methods that prevent the oxidation of the omega-3 fatty acid from occurring. As noted, these methods have met with limited success. Other efforts have focused on use of breathable packaging which allows the oxidation products to leave the food product thereby lowing their detection by consumers. Other efforts have been directed toward trying to determine what the oxidation products are and then identifying which ones cause the undesirable odors and tastes. Autoxidation of lipids in foods results in formation of a variety of aldehydes including saturated aldehydes, $\alpha,\beta$-monounsaturated aldehydes, polyunsaturated aldehydes, and hydroxylated aldehydes. Several monounsaturated and polyunsaturated aldehydes have been identified as potentially being the fishy odor and taste causative agents in marine oils. These include cis-4-heptenal; 2,4-octadienal; and trans-2, cis-6-nonadienal. Other aldehydes that have been shown to arise during autoxidation of other long chain polyunsaturated fatty acids include cis-4-heptenal and octanal.

The present invention is directed toward a method for trapping the autoxidation products and thereby removing the rancid fishy aroma and taste in food products. This approach is different from those that have been used by others in the past. It was hypothesized that addition of proteins, protein fragments, partially hydrolyzed proteins, or amino acids in some manner to food products might be able to trap these aldehydes released from the food products and avoid the development of rancid or fishy aromas and tastes in foods having omega-3 fatty acids or other oxidatively unstable fatty acids and oils incorporated into them.

In a first test a series of cereals with different levels of protein were tested for their ability to quench or remove a series of aldehydes, three of which have been positively identified as generated by DHA and EPA autoxidation, spiked into the cereal at a known amount. The five test aldehydes chosen were: cis-4-heptenal, octanal, trans-2-octenal, 2,4-octadienal, and trans-2-cis-6-nonadienal. The cereals chosen were Special K® vanilla, Special K® Protein Plus, Smart Start® Antioxidant, Smart Start® Healthy Heart, and Corn Flakes®. The cereal products were ground using a coffee mill and one gram of each ground cereal product was weighed into a 20 milliliter headspace vial. The five test aldehydes and an internal standard ethyl heptanoate were each dissolved in heptane. Then each vial containing ground cereal was spiked with either 5 or 30 micrograms of each test aldehyde and the internal control. Each vial was capped and stored at room temperature for three days. At the end of incubation, the remaining headspace aldehydes were analyzed by headspace Gas Chromotography-Flame Ionization Detection (GC-FID). The results are shown in Table 1 below.

**TABLE 1**

| Food Type | weight % protein | Remaining headspace aldehyde content (FID area count) | | | | | | | | | |
| | | A1 | | A2 | | A3 | | A4 | | A5 | |
| | | 5$\mu$g spike | 30$\mu$g spike | 5$\mu$g spike | 30$\mu$g spike | 5$\mu$g spike | 30$\mu$g spike | 5$\mu$g spike | 30$\mu$g spike | 5$\mu$g spike | 30$\mu$g spike |
| Corn Flakes® | 3.8 | 89 | 425 | 62 | 296 | 48 | 247 | 21 | 121 | 21 | 111 |
| Special K® Vanilla | 6.7 | 27 | 124 | 13 | 57 | 7 | 34 | 3 | 15 | 2 | 12 |
| Special K® Protein Plus | 34.6 | 11 | 49 | 5 | 21 | 2 | 9 | 1 | 4 | 0.8 | 3 |
| Smart Start® Antioxidant | 6.0 | 49 | 236 | 30 | 132 | 17 | 80 | 8 | 30 | 6 | 30 |
| Smart Start® Healthy Heart | 11.7 | 31 | 148 | 17 | 76 | 8 | 39 | 4 | 14 | 3 | 14 |
| A1: cis-4-heptenal; A2: octanal; A3: trans-2-octenal; A4: 2,4-octadienal; A5: trans-2,cis-6-nonadienal | | | | | | | | | | | |

Several observations can be made concerning the data. First, the lowest protein cereal Corn Flakes® also had the highest residual headspace levels of all of the tested aldehydes at both spiked levels. Second, within a type of cereal, i.e. Special K® or Smart Start®, the higher the protein level the lower the residual headspace levels of all the tested aldehydes at both spiked levels. Finally, there may be other effects of the type of cereal since the residual headspace levels of all of the tested aldehydes, except for the 30 microgram spike of 2,4-octadienal, were lower in the Special K® vanilla than in the Smart Start® Healthy Heart despite the higher level of protein in the Smart Start® Healthy Heart. The data suggested that proteins may be useful in trapping or quenching the aldehydes produced by omega-3 fatty acids and other lipids in foods. Therefore additional tests were conducted to determine the effectiveness of protein in quenching these test aldehydes.

In the next series of experiments the ability of various proteins to quench the test aldehydes was examined. In each case one gram of the test material was added to a 20 milliliter headspace vial. Then each vial was spiked with 10 micrograms of each of the test aldehydes. After 1 hour at room temperature the aldehyde quenching index (AQI) was determined using GC-FID of the headspace as before. The AQI of a particular sample is calculated by normalizing the AQI of corn starch as 1 as a control, i.e., AQI = Aldehyde Quenching Capability (AQC) of sample/AQC of corn starch. The AQC is calculated using the formula below wherein: $A_{IS}$ is the peak area of the internal standard; $W_{IS}$ is the weight of the spiked internal standard in micrograms; $A_A$ is the peak area of the spiked aldehyde compound; and $W_A$ is the weight of the spiked aldehyde compound in micrograms. In these experiments corn starch, which does not quench any of the test aldehydes, was used as a control internal standard and its AQI was set to 1. The larger the AQI the greater the quenching effect. In the table whey protein isolate is abbreviated (WPI). The results are presented in Table 2 below.

$$AQC = \frac{A_{IS} * W_A}{A_A * W_{IS}}$$

TABLE 2

| | Aldehyde Quenching Index (AQI at 1 hour) | | | | | | |
|---|---|---|---|---|---|---|---|
| | **Corn Starch** | **Gluten** | **Dextrose** | **Dextrin** | **WPI** | **Soy Protein** | **Maltodextrin** |
| **c4-Heptenal 1** | 2 | 2 | 1 | 5 | 7 | 1 | 1 |
| **Octanal 1** | 1 | 1 | 1 | 1 | 3 | 5 | 1 |
| **t2-Octenal** | 1 | 4 | 1 | 1 | 18 | 28 | 1 |
| **2,4-Octadienal** | 1 | 5 | 1 | 1 | 22 | 20 | 1 |
| **t2,c6-Nonadienal** | 1 | 5 | 1 | 1 | 22 | 50 | 1 |
| | | | | | | | |
| *10 microgram of each aldehydic compound was added to 1 gram of food ingredient* | | | | | | | |
| *Samples were kept at room temperature for 1 hour before analysis* | | | | | | | |

The results show that the whey protein isolate (WPI) and soy protein were very effective at quenching the aldehydes compared to corn starch, gluten, dextrose, dextrin, and maltodextrin. In the next series of experiments the dose dependency of the effect of whey protein isolate and soy protein was determined. Each protein was mixed with dextrose at a series of ratios and the AQI of each blend was determined after 16 hours at room temperature. Again each 20 milliliter headspace vial included 1 gram of the dextrose/protein blend and was spiked with 10 micrograms of each of the test aldehydes. Headspace aldehyde was determined as before using GC-FID. The results are presented in Tables 3 and 4 below.

TABLE 3

| | Aldehyde Quenching Index at 16 hours (AQI) | | | | | | | | | |
|---|---|---|---|---|---|---|---|---|---|---|
| **Percent of Whey Protein in Dextrose** | **0** | **1** | **3** | **6** | **10** | **20** | **30** | **50** | **70** | **90** |
| **c4-Heptenal** | 1.0 | 0.8 | 1.1 | 1.1 | 1.2 | 1.6 | 1.9 | 2.9 | 4.6 | 6.0 |
| **Octanal** | 1.0 | 1.0 | 1.1 | 1.2 | 1.3 | 1.7 | 1.9 | 2.7 | 4.5 | 6.0 |
| **t2-Octenal** | 1.0 | 1.0 | 1.2 | 1.2 | 1.5 | 2.3 | 2.9 | 7.3 | 18.8 | 28.6 |
| **2,4-Octadienal** | 1.0 | 0.9 | 1.1 | 1.2 | 1.3 | 1.8 | 2.2 | 3.9 | 8.7 | 13.3 |
| **t2-c4-Nonadienal** | 1.0 | 1.1 | 1.3 | 1.4 | 1.7 | 2.9 | 3.9 | 10.4 | 25.1 | 36.6 |
| | | | | | | | | | | |
| *10 microgram of each aldehydic compound awas added to 1 gram of food ingredient* | | | | | | | | | | |
| *Samples were kept at room temperature for 16 hour before analysis* | | | | | | | | | | |

TABLE 4

| | Aldehyde Quenching Index at 16 hours (AQI) | | | | | | | | | | |
|---|---|---|---|---|---|---|---|---|---|---|---|
| **Percent of Soy Protein in Dextrose** | **0** | **1** | **3** | **6** | **10** | **20** | **30** | **50** | **70** | **90** | **100** |
| **c4-Heptenal** | 1.0 | 1.5 | 2.9 | 1.9 | 2.6 | 2.3 | 2.8 | 3.6 | 5.0 | 4.6 | 5.3 |
| **Octanal** | 1.0 | 1.4 | 2.1 | 1.5 | 1.9 | 1.9 | 2.3 | 2.9 | 4.1 | 3.9 | 4.4 |

(continued)

| | Aldehyde Quenching Index at 16 hours (AQI) | | | | | | | | | | |
|---|---|---|---|---|---|---|---|---|---|---|---|
| **t2-Octenal 1.0** | 1.0 | 1.4 | 2.4 | 2.2 | 3.7 | 7.1 | 12.6 | 20.8 | 33.0 | 36.2 | 33.1 |
| **2,4-Octadienal** | 1.0 | 1.0 | 1.4 | 1.3 | 1.9 | 2.9 | 3.9 | 5.2 | 7.2 | 7.5 | 8.6 |
| **t2-c4-Nonadienal** | 1.0 | 1.4 | 2.4 | 2.7 | 4.9 | 11.5 | 19.1 | 33.0 | 45.2 | 46.4 | 58.2 |
| | | | | | | | | | | | |
| *10 microgram* of *each aldehydic compound was added to 1 gram* of *food ingredient* | | | | | | | | | | | |
| *Samples were kept at room temperature for 16 hour before analysis* | | | | | | | | | | | |

The results show a clear relationship between the level of either WPI or soy protein and the ability to quench the test aldehydes. In addition, one can see differences in the quenching of a given test aldehyde depending on the protein source. It may be that a combination of proteins is best in quenching all of the aldehydes.

In the next series of experiments the effect of hydrolysis of the WPI or soy protein on quenching ability was determined. The degree of hydrolysis of a sample was determined using the following formula: Degree of Hydrolysis = (amino nitrogen in the sample/total nitrogen in the sample)* 100. The experimental design was as in previous experiments, however, the samples were incubated at room temperature for 4 hours. The results are shown in Table 5 below. The results indicate that enhanced quenching can be achieved by using partially hydrolyzed proteins compared to the native proteins themselves.

**TABLE 5**

| | | Aldehyde Quenching Index at 4 hours | | | | |
|---|---|---|---|---|---|---|
| **Protein ID** | **Process** | **C4-Heptenal** | **Octanal** | **t2-Octenal** | **2,4-Octadienal** | **t2-c6-Nonadienal** |
| Corn Starch | | 1 | 1 | 1 | 1 | 1 |
| HLA 109 | WPI | 7.5 | 6.6 | 15.7 | 6 | 16.6 |
| HLA-168 | WPI | 1.9 | 1.6 | 2.4 | 1.4 | 2.6 |
| BiPRO | undenatured WPI | 5.1 | 3.0 | 4.6 | 2.9 | 4.5 |
| BioZate 1 | hydrolyzed WPI | 35.3 | 35.0 | 33.3 | 20.3 | 46.9 |
| BioZate 3 | hydrolyzed WPI | 25.1 | 27.8 | 38.0 | 25.2 | 51.2 |
| Thermax | hydrolyzed WPI | 56.5 | 65.0 | 126.6 | 74.2 | 120.2 |
| Barflex | hydrolyzed WPI | 19.6 | 22.3 | 43.2 | 23.5 | 38.2 |
| | | | | | | |
| Soy Protein Acid Hydrolysate | hydrolyzed soy | 156 | 16.1 | 31.3 | 10.4 | 43.6 |
| Soy Protein Isolate 6070 | SPI | 1.8 | 1.2 | 1.5 | 1.0 | 1.2 |

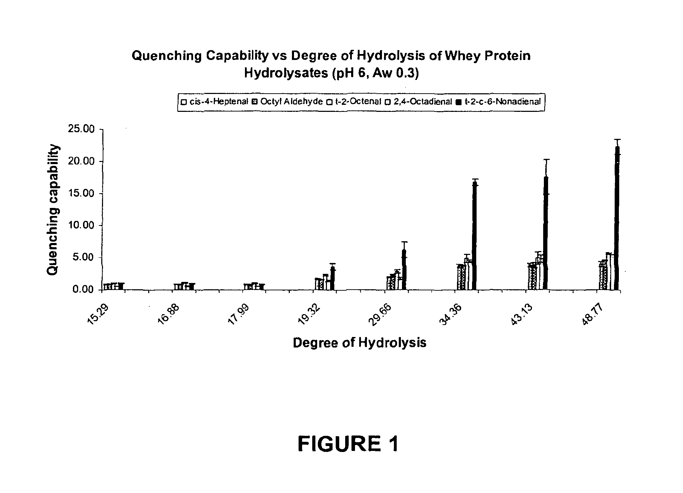

Based on the results in Table 5 the next series of experiments were designed to determine the effect of the degree of hydrolysis of a WPI on its ability to quench the test aldehydes. The testing protocol was as described in Table 5 using various WPI that were partially hydrolyzed to different degrees. The figure clearly shows that as the degree of hydrolysis increases the quenching ability also increases; however, it is also known that as the degree of hydrolysis increases so does the bitterness flavor of the partially hydrolyzed WPI. Therefore, there may be an organoleptic limit to the degree of hydrolysis that is useful. The results are presented in figure 1.

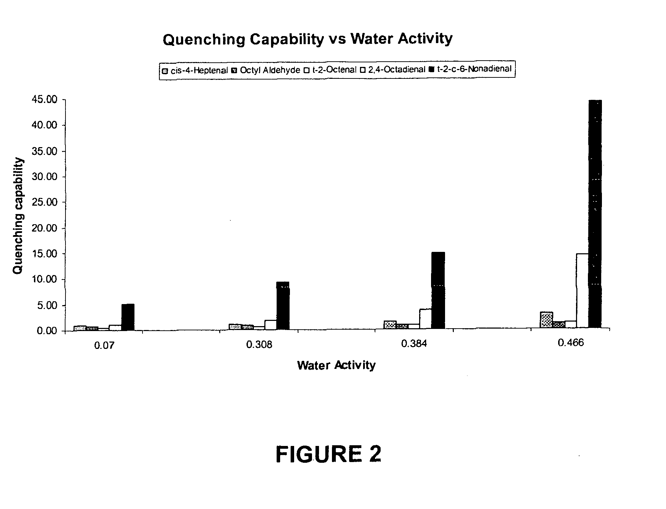

In another series of tests the effect of water activity of the partially hydrolyzed WPI sample on its ability to quench the test aldehydes was determined. For this experiment the WPI had a degree of hydrolysis of 26 as calculated above and the water activity varied from 0.07 to 0.466. The results are shown in figure 2. The results demonstrate that as water activity increased so does the quenching capability. This is particularly pronounced for the test aldehydes 2,4 -octadienal and trans-2-cis-6-nonadienal which are believed to cause the fishy aroma associated with oxidation of DHA and EPA.

In another series of experiments the ability of various amino acids to quench the test aldehydes was determined. The process was as described above in Table 5. The results are presented below in Table 6. A reading of below the detection limit (bdl) means that no aldehydes were detectable, i.e. quenching was essentially complete. One can see that there are vast differences between the various amino acids in their ability to quench. Some are no better than corn starch and others are excellent quenchers.

**TABLE 6**

| Amino Acid ID | Aldehyde Quenching Index at 4 hours | | | | |
|---|---|---|---|---|---|
| | c4-Heptenal | Octanal | t2-Octenal | 2,4-Octadienal | t2-c6-Nonadienal |
| Corn Starch | 1 | 1 | 1 | 1 | 1 |
| L-Lysine | 1816.1 | 713.3 | bdl* | bdl | bdl |
| L-Cysteine | 443.5 | 523.8 | bdl | bdl | bdl |
| beta-Alanine | 104.64 | 143.5 | bdl | bdl | bdl |
| L-Arginine | 186.8 | 63.8 | 34.6 | bdl | bdl |
| L-Cysteine ethyl ester HCL | 124.1 | 221.4 | bdl | bdl | 147.6 |
| gama-Amino-butyric Acid | 137.2 | 128.5 | 4.7 | 11.7 | 231.6 |
| Imidazole | 0.8 | 0.5 | 42.9 | bdl | bdl |
| L-Proline | 3.4 | 2.1 | 641.8 | 47.2 | bdl |
| L-Tryptophan | 31.0 | 22.0 | 131.8 | 15.8 | bdl |
| L-Leucine | 4.9 | 3.0 | 22.6 | 1.8 | 32.4 |
| L-Methionine | 11.24 | 6.1 | 8.3 | 3.3 | 12.3 |
| L-Threonine | 11.3 | 12.6 | 3.2 | 1.2 | 3.4 |
| L-Valine | 4.7 | 3.2 | 15.9 | 2.3 | 27.3 |
| Glycine | 4.0 | 3.4 | 15.9 | 2.8 | 26.6 |
| L-Alanine | 3.0 | 3.1 | 6.8 | 1.6 | 8.8 |
| L-Serine | 6.2 | 5.6 | 4.7 | 1.3 | 5.5 |
| L-Glutarmic acid | 2.7 | 2.1 | 6.5 | 2.5 | 7.7 |
| L-Aspartic acid | 2.2 | 1.9 | 3.1 | 1.6 | 3.0 |
| L-Tyrosine | 0.5 | 0.6 | 2.2 | 1.9 | 3.2 |
| L-Phenylalanine | 1.1 | 0.9 | 1.3 | 0.9 | 1.3 |
| *bdl = below detection limit | | | | | |

The amino acids L-Lysine, L-cysteine, $\beta$-alanine, L-Arginine, L-cysteine ethyl ester HCl, and $\gamma$-amino butyric acid are the most effect in quenching the test aldehydic compounds. The AQIs of these amino acids are substantially higher than protein and partially hydrolyzed proteins. Among these most effect amino acids, there is a common functional structure, i.e. the amino group is not in the $\alpha$ position of the amino acid. In other words, the most effective amino acids in quenching the test aldehydic compounds are those with the amino group in the $\beta$ or farther position of the carbon chain from the carboxylic acid group of the same molecule or they have a sulfhydryl group like cysteine.

In all the experiments described above the quenching effects were also tested by sniffing the products at the end of the incubations. Those with significant quenching were less odiferous and in some there was not detectable odor. The results demonstrate that the quenching can be accomplished in prepared foods by adding protein, partially hydrolyzed protein, or amino acids to the foods. The present invention can be used to quench the rancid or fishy odors and tastes found in foods containing long chain polyunsaturated fatty acids such as linoleic acid, linolenic acid, docosahexaenoic acid, eicosapentaenoic acid, and the oils discussed above. The quenching can occur in the interspatial headspace in the food and in the headspace of the food packages. The quenching effect can be demonstrated in low, intermediate and high moisture food products. The quenching effect occurs at ambient temperature. It is hypothesized that the reaction between the aldehyde and the amino acids, be they in a peptide or not, may occur via a Michael-type addition or through a Schiff base reaction. The invention can be used in a large variety of ways. The amino acid source can be a partially hydrolyzed whey protein. In one method, the amino acid source can be used to encapsulate the oxidatively unstable oils and fatty acids. As discussed above typical unstable oils/fatty acids include soybean oil, flaxseed oil, marine oil, marine micro algae oil, linoleic acid, linolenic acid, docosahexaenoic acid, and eicosapentaenoic acid. The encapsulation could be accomplished by simple blending of the oil or DHA source with the amino acid source in water followed by drying in a spray dryer or fluidized bed dryer. Alternatively, the amino acid source and the DHA source can simply be blended together. Use of a powdered DHA source makes for very easy blending with the amino acid source. The source of amino acids comprises partially hydrolyzed whey proteins. The level of amino acid source can be varied depending on what is necessary to maintain the quenching for the desired period of storage time. The encapsulated oil can then be added to food products with the expectation that the food will remain stable, i.e. no rancid or fishy aromas or tastes, with respect to the oxidatively unstable fatty acids over a significant storage period. In another method, the amino acid source could be provided in a sachet and the sachet could be placed, for example, into a package of the food such as a box of ready to eat cereal. In another use the amino acid source could be incorporated onto or into a bag liner or packaging material. It is believed that all of these methods will work to extend the shelf life of food products that contain oxidatively unstable oils or fatty acids.

The teachings from the above experiments were applied to a first food example by using the insights to test the ability of a series of protein combinations that included varying amounts of partially hydrolyzed and non-hydrolyzed protein from a variety of sources to prevent development of fishy aroma in cold formed cereal bars that included the omega-3 fatty acid DHA. Both oil and powdered sources of DHA were tested in the protocol. The formula for the chocolate flavored cold formed cereal bar is given in Table 7 below. The protein sources were as follows: Barflex is a partially hydrolyzed whey protein, Provon 190 is a non-hydrolyzed whey protein, Solae 313 is a partially hydrolyzed soy protein, Solae 661 is a non-hydrolyzed soy protein. The source of DHA was either Martek's powder KS35 or the oil HM. A series of twenty conditions were created as noted in Table 8 below. All of the bars included 100 milligrams of DHA per serving, this required from 1 to 4% by weight of the DHA source and adjustments in the amount of the other components were made to accommodate this. After formation the cold formed bars were packaged and stored at 29.4°C (85°F) 50% relative humidity. Samples of each condition were evaluated for development of fishy aroma or taste by trained organoleptic specialists at time 0 and on a weekly basis thereafter over a 12 week period. Each sample was given a ranking of from 1 to 5, with 5 being the highest level of fishy aroma or taste. The bars were formed as follows the oil blend and the dry blend were combined. The mixture was then bound together using the binder syrup and cold formed into a mass that was cut into bars. All steps were performed at temperatures of 46.1°C (115° F) or less. The cold forming can be accomplished as known in the art by extrusion, compression rolling or other methods of cold forming. Cold forming refers to a process wherein external heat is not added to the forming system. The cold formed bars were then enrobed in a compound coating and packaged. The results of the analysis are given in Table 9 below. Each result is the average of at least 4 evaluations at each time point.

**TABLE 7**

| Component | % by weight based on final bar weight |
|---|---|
| **Oil Blend** | |
| DHA source | 1 - 4 |
| Vegetable oil | 2 - 6 |
| Shortening | 2 - 8 |
| **Dry Blend** | |
| Light cocoa | 5 - 3 |

(continued)

| Dry Blend | |
|---|---|
| Protein combination | 18 |
| Chocolate | 2 - 10 |
| Bulking agents | 2 - 12 |
| **Binder Syrup** | |
| Sugar | 2 - 10 |
| High fructose corn syrup | 15 - 25 |
| Corn syrup | 2 - 10 |
| Glycerin | 1 - 5 |
| Flavors and fortificants | 1 - 5 |
| **Compound coating** | 20 - 30 |

## TABLE 8

| Experimental number | % Barflex | % Provon 190 | % Solae 313 | % Solae 661 | KS35 | HM |
|---|---|---|---|---|---|---|
| 1 | 80 | 20 | | | +++ | |
| 2 | | | 20 | 80 | +++ | |
| 3 | 50 | | | 50 | +++ | |
| 4 | | | 80 | 20 | +++ | |
| 5 | 50 | 50 | | | | +++ |
| 6 | | 80 | 20 | | | +++ |
| 7 | 80 | | | 20 | | +++ |
| 8 | 20 | 80 | | | | +++ |
| 9 | | | 20 | 80 | | +++ |
| 10 | | | 50 | 50 | +++ | |
| 11 | | 50 | 50 | | +++ | |
| 12 | 80 | | | 20 | | +++ |
| 13 | | 20 | 80 | | | +++ |
| 14 | | 50 | 50 | | +++ | |
| 15 | 50 | 50 | | | +++ | |
| 16 | 20 | 80 | | | +++ | |
| 17 | 20 | | | 80 | +++ | |
| 18 | | 20 | 80 | | | +++ |
| 19 | 20 | | | 80 | | +++ |
| 20 | | | 65 | 35 | | +++ |

**TABLE 9**

| # | Week 0 | Week 1 | Week 2 | Week 3 | Week 4 | Week 5 | Week 6 | Week 7 | Week 8 | Week 9 | Week 10 | Week 11 | Week 12 |
|---|---|---|---|---|---|---|---|---|---|---|---|---|---|
| 1 | 0 | 0 | 0 | 0 | 0 | 0 | 0 | 0 | 0 | 0 | 0 | 0 | 0 |
| 2 | 1 | 2 | 0 | 0 | 1 | 1 | 0 | 3 | 0 | 0 | 0 | 0 | 1 |
| 3 | 0 | 0 | 0 | 1 | 0 | 0 | 0 | 0 | 0 | 0 | 0 | 0 | 0 |
| 4 | 2 | 4 | 1.5 | 2 | 1 | 2 | 2 | 2 | 2 | 1 | 1 | 1 | 1 |
| 5 | 0 | 0 | 0 | 0 | 0 | 0 | 1 | 0 | 1 | 1 | 1 | 1 | 1 |
| 6 | 0 | 0 | 0 | 0 | 2 | 1 | 3 | 4 | 4 | 4 | 3 | 3 | 4 |
| 7 | 0 | 0 | 0 | 0 | 0 | 0 | 1 | 0 | 0 | 1 | 1 | 1 | 0 |
| 8 | 0 | 0 | 0 | 0 | 0 | 0 | 0 | 0 | 0 | 0 | 0 | 0 | 1 |
| 9 | 0 | 1 | 0 | 0 | 0 | 2 | 1 | 1 | 0 | 1 | 0 | 0 | 3 |
| 10 | 2 | 2 | 0 | 0 | 1 | 1 | 0 | 0 | 0 | 0 | 0 | 1 | 0 |
| 11 | 0 | 1 | 0 | 2 | 1 | 1 | 1 | 1 | 0 | 1 | 0 | 0 | 1 |
| 12 | 0 | 0 | 0 | 0 | 0 | 1 | 0 | 0 | 0 | 1 | 0 | 0 | 0 |
| 13 | 0 | 3 | 3 | 5 | 5 | 4 | 5 | 3 | 4 | 5 | 3 | 3 | 5 |
| 14 | 0 | 2 | 0.5 | 0 | 0 | 0 | 0 | 1 | 1 | 1 | 1 | 0 | 0 |
| 15 | 0 | 0 | 0.5 | 0 | 0 | 0 | 0 | 0 | 0 | 0 | 0 | 0 | 0 |
| 16 | 0 | 0 | 0 | 0 | 0 | 0 | 0 | 0 | 0 | 0 | 0 | 0 | 1 |
| 17 | 0 | 2 | 0 | 0 | 0 | 1 | 1 | 1 | 0 | 0 | 0 | 0 | 0 |
| 18 | 0 | 4 | 3.5 | 5 | 4 | 5 | 4 | 5 | 5 | 5 | 5 | 5 | 5 |
| 19 | 0 | 1 | 0 | 0 | 0 | 0 | 0 | 0 | 1 | 0 | 0 | 0 | 1 |
| 20 | 0 | 4 | 4 | 4 | 5 | 5 | 4 | 4 | 4 | 5 | 5 | 4 | 5 |

EP 2 068 661 B1

The results were quite dramatic with the Barflex, partially hydrolyzed whey protein, being far superior to the Solae 313, partially hydrolyzed soy protein, in virtually all cases. Almost all conditions that included partially hydrolyzed whey protein, even at the lowest level of 20% of total protein, stayed at a ranking of I or less for the entire test period. The samples with Barflex and Provon 190 are numbers 1, 5, 8, 15, and 16. The samples with Barflex and Solae 661 are numbers 3, 7, 12, 17, and 19. By way of contrast, many of the partially hydrolyzed soy protein samples achieved rankings of 3 to 5 that occurred early on and were maintained. The samples with Solae 313 and Provon 190 are numbers 6, 11, 13, 14, and 18. The samples with Solae 313 and Solae 661 are numbers 2, 4, 9, 10, and 20. The results clearly show the benefit of inclusion of the partially hydrolyzed whey protein in maintaining the stability of actual food samples that included DHA and show that this effect can be achieved with as little as 3.6% partially hydrolyzed whey protein in the final food product.

In another food product example the DHA source HM, was combined with partially hydrolyzed whey protein at a weight ratio of 25% HM with 75% partially hydrolyzed whey protein. The partially hydrolyzed whey protein was in a water solution at a ratio of 1 part partially hydrolyzed whey protein to 20 parts water. The HM and partially hydrolyzed whey protein solution were homogenized together and then spray dried to form a powder. This powder was then incorporated into a variety of food types.

In a final food example the spray dried DHA and protein powder described above was used in a formulation for preparing a baked fruit filled bar product. The basic processing steps were as follows: formation of the dough; formation of the fruit-based filling material; co-extrusion of the filling material and the dough layer at a low temperature of less than about 54.4°C (130° F) with cutting to length, the dough surrounding the fruit based filling; and baking the bars at approximately 198.9°C (390° F) for 8 minutes; cooling the bars and packaging them. The bars were baked to have a final water activity of 0.7 or less. The fruit based filling is a typical fruit based filling as is know in the industry. The filling typically comprises: high fructose corn syrup, corn syrup, fruit puree concentrate, glycerin, sugar, modified corn starch, sodium citrate, citric acid, sodium alginate, natural and artificial flavors, dicalcium phosphate, modified cellulose, colorings, and malic acid. Any known filling material can be used in the invention. The stability of the omega-3 fatty acids is not altered by the filling composition in this invention. Generally the finished bar comprises from 55 to 65% by weight dough with the remainder being filling. The fruit filled bar products included sufficient DHA source to produce 40 milligrams of DHA per serving. The formulas for the bars with and without the DHA protein powder are given in table 10 below. The control, sample 1, was addition of DHA to the dough without the amino acid source. Sample 2 included DHA and the partially hydrolyzed whey protein powder described above. The products were stored at under several conditions. In a first condition the bars were stored at 29.4°C (85° F) 50% relative humidity and tested weekly for development of fishy aroma or taste. Under this condition the control bars with DHA in the absence of protein began to fail at 6 weeks and all failed by 9 weeks. They all developed fishy aromas and tastes. By way of contrast, none of the samples made with the DHA protein powder developed a fishy aroma or taste under this condition for over 12 weeks. In another test the samples were stored at 21.1°C (70° F) 50% relative humidity and tested periodically for development of fishy aroma or taste. The control samples failed within 9 weeks while the samples made with DHA and protein were stable for at least 6 months.

TABLE 10

| Component | Sample 1 % by weight | Sample 2% by weight |
|---|---|---|
| **Fruit Filling** | 35 - 45 | 35 - 45 |
| **Dough Layer** | | |
| mid oleic sunflower oil | 6 | 6 |
| spray dried DHA and protein powder | 0.0 | 1.2 |
| DHA powder | 1.5 | 0.0 |
| high fructose corn syrup | 5 - 15 | 5 - 15 |
| sugar | 5--20 | 5 - 20 |
| Vitamin and mineral blend | 0 - 3 | 0 - 3 |
| Flavoring | 0 - 3 | 0 - 3 |
| Mix above components | | |
| on high for 6 minutes in a Hobart mixer | | |
| Milk powder | 0 - 2 | 0 - 2 |
| Water | 5 - 10 | 5 - 10 |

(continued)

| Component | Sample 1 % by weight | Sample 2% by weight |
|---|---|---|
| Flour | 20 - 35 | 20 - 35 |
| Salt | 0 - 1 | 0 - 1 |
| Dough conditioner | 0 - 1 | 0 - 1 |
| Sodium bicarbonate | 0.3 - 0.7 | 0.3 - 0.7 |
| Mix on high for 3 minutes | | |
| Oatmeal | 10 - 20 | 10 - 20 |
| Mix on high for 1.5 minutes | | |

The discoveries of the present invention have wide application to a variety of food products. The results demonstrate that combining an amino acid source with sources of DHA or EPA stabilizes the DHA and EPA and prevents the development of fishy aromas and tastes over extended storage times. The amino acid source preferably comprises at least one partially hydrolyzed whey protein. The stabilization can be achieved either by initially combining the amino acid source with the DHA or EPA source or by including an amino acid source in a food product containing a DHA or EPA source. This invention is applicable to a wide range of food products including ready to eat cereals, potato chips, nacho chips, corn chips, crackers, cookies, toaster pastries, fruit filled bars, granola bar, cereal bars, baked cheese curls, fried cheese curls and other food products. It is preferable that if the amino acid source is initially combined with the source of DHA or EPA that the weight ratio be 1 part DHA and/or EPA to 0.1 to 50 parts amino acid source, preferably partially hydrolyzed whey protein or other partially hydrolyzed proteins. In a food product preferably a 100 gram serving includes from 10 to 2000 milligrams of DHA and/or EPA and 100 milligrams to 40 grams of an amino acid source. As described above preferably the amino acid source comprises partially hydrolyzed whey protein. It is believed that similar ratios of protein to autoxidation prone lipid are applicable to lipids other than DHA and EPA.

The foregoing invention has been described in accordance with the relevant legal standards, thus the description is exemplary rather than limiting in nature. Variations and modifications to the disclosed embodiment may become apparent to those skilled in the art and do come within the scope of the invention. Accordingly, the scope of legal protection afforded this invention can only be determined by studying the following claims.

**Claims**

1.  A method of quenching aldehyde products of lipid autoxidation comprising the steps of:

    providing a partially hydrolyzed whey protein having a degree of hydrolysis of 26% or greater and a water activity of 0.308 or greater;
    exposing a food product containing lipids prone to autoxidation comprising at least one of docosahexaenoic acid or eicosapentaenoic acid to the partially hydrolyzed whey protein such that the aldehyde products released by the autoxidation are quenched by the partially hydrolyzed whey protein and the shelf life of the food product is extended to at least 12 weeks under storage conditions of 29.4° C (85° F) and 50% relative humidity.

2.  The method according to claim 1 wherein the step of exposing the food product to the partially hydrolyzed whey protein comprises packaging the food product in a packaging material that has applied thereto or incorporated therein the partially hydrolyzed whey protein.

3.  The method according to claim 1 wherein the step of exposing the food product to the partially hydrolyzed whey protein comprises packaging the food product in a packaging material and including a sachet containing the partially hydrolyzed whey protein in the packaging material.

4.  The method according to claim 1 wherein the step of exposing the food product to the partially hydrolyzed whey protein comprises adding the partially hydrolyzed whey protein directly to the food product.

5.  The method according to claim 1 wherein the ratio of partially hydrolyzed whey protein to lipid prone to autoxidation is from 1 part lipid to 0.1 to 50 parts partially hydrolyzed whey protein.

6.  A method of quenching the aldehyde products from autoxidation of lipids prone to autoxidation comprising the steps of:

    providing a partially hydrolyzed whey protein having a degree of hydrolysis of 26% or greater and a water activity of 0.308 or greater;

    exposing a lipid prone to autoxidation comprising at least one of docosahexaenoic acid or eicosapentaenoic acid to the partially hydrolyzed whey protein such that the aldehyde products released by the autoxidation are quenched by the partially hydrolyzed whey protein and the shelf life of the lipid is extended to at least 12 weeks under storage conditions of 29.4° C (85° F) and 50% relative humidity.

7.  The method according to claim 6 wherein the step of exposing the lipid to the partially hydrolyzed whey protein comprises packaging the lipid in a packaging material that has applied thereto or incorporated therein the partially hydrolyzed whey protein.

8.  The method according to claim 6 wherein the step of exposing the lipid to the partially hydrolyzed whey protein comprises packaging the lipid in a packaging material and including a sachet containing the partially hydrolyzed whey protein in the packaging material.

9.  The method according to claim 6 wherein the weight ratio of lipid prone to autoxidation to partially hydrolyzed whey protein is 1 part lipid to from 0.1 to 50 parts partially hydrolyzed whey protein.

10. The method according to claim 6 wherein the step of exposing the lipid to the partially hydrolyzed whey protein comprises combining the partially hydrolyzed whey protein with the lipid.

11. The method according to claim 6 wherein the partially hydrolyzed whey protein and the lipid are combined and dried to form a powdered material.

12. A food product comprising stabilized omega-3 fatty acids comprising:

    a partially hydrolyzed whey protein having a degree of hydrolysis of 26% or greater and a water activity of 0.308 or greater;

    at least one of an omega-3 fatty acid comprising docosahexaenoic acid, eicosapentaenoic acid, or a mixture thereof; and

    said food product being storage stable under storage conditions of 29.4° C (85° F) and 50% relative humidity for at least 12 weeks.

13. The food product as recited in claim 12 wherein said food product comprises from 0.1 to 40 grams of said partially hydrolyzed whey protein and from 10 to 2000 milligrams of said at least one omega-3 fatty acid in 100 grams of said food product.

14. The food product as recited in claim 12 wherein said food product comprises at least one of a ready to eat cereal, a chip, a cracker, a cookie, a granola bar, a cereal bar, a ready to eat oatmeal, a baked good, a toaster pastry, a baked cheese curl, or a fried cheese curl.


**Patentansprüche**

1.  Verfahren zum Auslöschen von Aldehydprodukten der Lipidautoxidation, umfassend die Schritte:

    Bereitstellen eines teilweise hydrolysierten Molkenproteins mit einem Hydrolysegrad von 26% oder mehr und einer Wasseraktivität von 0,308 oder mehr;

    Aussetzen eines Nahrungsmittelprodukts, enthaltend für Autoxidation anfällige Lipide, umfassend mindestens eine von Docosahexaensäure oder Eicosapentaensäure, dem teilweise hydrolysierten Molkenprotein, derart, dass die Aldehydprodukte, freigesetzt durch die Autoxidation, durch das teilweise hydrolysierte Molkenprotein ausgelöscht werden und die Lagerbeständigkeit des Nahrungsmittelprodukts unter den Lagerungsbedingungen von 29,4°C (85°F) und 50% relativer Feuchtigkeit auf mindestens 12 Wochen ausgedehnt wird.

2.  Verfahren gemäß Anspruch 1, wobei der Schritt, das Nahrungsmittelprodukt dem teilweise hydrolysierten Molkenprotein auszusetzen, umfasst, das Nahrungsmittelprodukt in ein Verpackungsmaterial zu verpacken, worauf das teilweise hydrolysierte Molkenprotein aufgebracht worden ist oder worin es eingebracht worden ist.

3.  Verfahren gemäß Anspruch 1, wobei der Schritt, das Nahrungsmittelprodukt dem teilweise hydrolysierten Molkenprotein auszusetzen, umfasst, das Nahrungsmittelprodukt in ein Verpackungsmaterial zu verpacken und ein Kissen, enthaltend das teilweise hydrolysierte Molkenprotein, in das Verpackungsmaterial einzuschließen.

4.  Verfahren gemäß Anspruch 1, wobei der Schritt, das Nahrungsmittelprodukt dem teilweise hydrolysierte Molkenprotein auszusetzen, umfasst, das teilweise hydrolysierte Molkenprotein direkt zu dem Nahrungsmittelprodukt hinzuzufügen.

5.  Verfahren gemäß Anspruch 1, wobei das Verhältnis von teilweise hydrolysiertem Molkenprotein zu für Autoxidation anfälligem Lipid 1 Teil Lipid zu von 0,1 bis 50 Teile teilweise hydrolysiertem Molkenprotein ist.

6.  Verfahren zum Auslöschen der Aldehydprodukte aus der Autoxidation von für Autoxidation anfälligen Lipiden, umfassend die Schritte:

    Bereitstellen eines teilweise hydrolysierten Molkenproteins mit einem Hydrolysegrad von 26% oder mehr und einer Wasseraktivität von 0,308 oder mehr;
    Aussetzen eines für Autoxidation anfälligen Lipids, umfassend mindestens eine von Docosahexaensäure oder Eicosapentaensäure, dem teilweise hydrolysierten Molkenprotein, derart, dass die Aldehydprodukte, freigesetzt durch die Autoxidation, durch das teilweise hydrolysierte Molkenprotein ausgelöscht werden und die Lagerbeständigkeit des Lipids unter den Lagerungsbedingungen von 29,4°C (85°F) und 50% relativer Feuchtigkeit auf mindestens 12 Wochen ausgedehnt wird.

7.  Verfahren gemäß Anspruch 6, wobei der Schritt, das Lipid dem teilweise hydrolysierten Molkenprotein auszusetzen, umfasst, das Lipid in ein Verpackungsmaterial zu verpacken, worauf das teilweise hydrolysierte Molkenprotein aufgebracht worden ist oder worin es eingebracht worden ist.

8.  Verfahren gemäß Anspruch 6, wobei der Schritt, das Lipid dem teilweise hydrolysierten Molkenprotein auszusetzen, umfasst, das Lipid in ein Verpackungsmaterial zu verpacken und ein Kissen, enthaltend das teilweise hydrolysierte Molkenprotein, in das Verpackungsmaterial einzuschließen.

9.  Verfahren gemäß Anspruch 6, wobei das Gewichtsverhältnis von für Autoxidation anfälligem Lipid zu teilweise hydrolysiertem Molkenprotein 1 Teil Lipid zu von 0,1 bis 50 Teile teilweise hydrolysiertem Molkenprotein ist.

10. Verfahren gemäß Anspruch 6, wobei der Schritt, das Lipid dem teilweise hydrolysierten Molkenprotein auszusetzen, umfasst, das teilweise hydrolysierte Molkenprotein mit dem Lipid zu vereinigen.

11. Verfahren gemäß Anspruch 6, wobei das teilweise hydrolysierte Molkenprotein und das Lipid vereinigt und getrocknet werden, um ein pulverförmiges Material zu bilden.

12. Nahrungsmittelprodukt, umfassend stabilisierte omega-3-Fettsäuren, umfassend:

    ein teilweise hydrolysiertes Molkenprotein mit einem Hydrolysegrad von 26% oder mehr und einer Wasseraktivität von 0,308 oder mehr;
    mindestens eine von einer omega-3-Fettsäure, umfassend Docosahexaensäure, Eicosapentaensäure oder ein Gemisch davon; und
    wobei das Nahrungsmittelprodukt unter den Lagerungsbedingungen von 29,4°C (85°F) und 50% relativer Feuchtigkeit für mindestens 12 Wochen lagerungsstabil ist.

13. Nahrungsmittelprodukt wie in Anspruch 12 genannt, wobei das Nahrungsmittelprodukt von 0,1 bis 40 Gramm von dem teilweise hydrolysierten Molkenprotein und von 10 bis 2000 Milligramm von der mindestens einen omega-3-Fettsäure in 100 Gramm von dem Nahrungsmittelprodukt umfasst.

14. Nahrungsmittelprodukt wie in Anspruch 12 genannt, wobei das Nahrungsmittelprodukt mindestens eines von einer essfertigen Getreideflocke, einem Chip, einem Cracker, einem Plätzchen, einem Müsliriegel, einem Getreideriegel, einer essfertigen Haferflocke, einer Backware, einem Toastergebäck, einer gebackenen Käselocke oder einer frittierten Käselocke umfasst.

**Revendications**

1. Procédé pour la trempe de produits aldéhydes d'auto-oxydation de lipides comprenant les étapes:

   de fourniture d'une protéine de lactosérum partiellement hydrolysée possédant un degré d'hydrolyse de 26% ou plus et une activité de l'eau de 0,308 ou plus;
   d'exposition d'un produit alimentaire contenant des lipides enclins à une auto-oxydation comprenant au moins un parmi l'acide docosahexaénoïque ou l'acide eicosapentaénoïque à la protéine de lactosérum partiellement hydrolysée de sorte que les produits aldéhydes libérés par l'auto-oxydation sont trempés par la protéine de lactosérum partiellement hydrolysée et la durée de conservation du produit alimentaire est prolongée à au moins 12 semaines dans des conditions de stockage de 29,4°C (85°F) et de 50% d'humidité relative.

2. Procédé selon la revendication 1, dans lequel l'étape d'exposition du produit alimentaire à la protéine de lactosérum partiellement hydrolysée comprend l'emballage du produit alimentaire dans un matériau d'emballage qui possède, appliquée sur celui-ci ou incorporée à l'intérieur, la protéine de lactosérum partiellement hydrolysée.

3. Procédé selon la revendication 1, dans lequel l'étape d'exposition du produit alimentaire à la protéine de lactosérum partiellement hydrolysée comprend l'emballage du produit alimentaire dans un matériau d'emballage et incluant un sachet contenant la protéine de lactosérum partiellement hydrolysée dans le matériau d'emballage.

4. Procédé selon la revendication 1, dans lequel l'étape d'exposition du produit alimentaire à la protéine de lactosérum partiellement hydrolysée comprend l'ajout de la protéine de lactosérum partiellement hydrolysée directement au produit alimentaire.

5. Procédé selon la revendication 1, dans lequel le rapport de la protéine de lactosérum partiellement hydrolysée sur le lipide enclin à une auto-oxydation est de 1 partie de lipide sur 0,1 à 50 parties de protéine de lactosérum partiellement hydrolysée.

6. Procédé pour la trempe de produits aldéhydes provenant d'une auto-oxydation de lipides enclins à une auto-oxydation comprenant les étapes:

   de fourniture d'une protéine de lactosérum partiellement hydrolysée possédant un degré d'hydrolyse de 26% ou plus et une activité de l'eau de 0,308 ou plus;
   d'exposition d'un lipide enclin à une auto-oxydation comprenant au moins un parmi l'acide docosahexaénoïque ou l'acide eicosapentaénoïque à la protéine de lactosérum partiellement hydrolysée de sorte que les produits aldéhydes libérés par l'auto-oxydation sont trempés par la protéine de lactosérum partiellement hydrolysée et la durée de conservation du lipide est prolongée à au moins 12 semaines dans des conditions de stockage de 29,4°C (85°F) et de 50% d'humidité relative.

7. Procédé selon la revendication 6, dans lequel l'étape d'exposition du lipide à la protéine de lactosérum partiellement hydrolysée comprend l'emballage du lipide dans un matériau d'emballage qui possède, appliquée sur celui-ci ou incorporée à l'intérieur, la protéine de lactosérum partiellement hydrolysée.

8. Procédé selon la revendication 6, dans lequel l'étape d'exposition du lipide à la protéine de lactosérum partiellement hydrolysée comprend l'emballage du lipide dans un matériau d'emballage et incluant un sachet contenant la protéine de lactosérum partiellement hydrolysée dans le matériau d'emballage.

9. Procédé selon la revendication 6, dans lequel le rapport en poids de lipide enclin à une auto-oxydation sur la protéine de lactosérum partiellement hydrolysée est de 1 partie de lipide sur de 0,1 à 50 parties de protéine de lactosérum partiellement hydrolysée.

10. Procédé selon la revendication 6, dans lequel l'étape d'exposition du lipide à la protéine de lactosérum partiellement hydrolysée comprend la combinaison de la protéine de lactosérum partiellement hydrolysée avec le lipide.

11. Procédé selon la revendication 6, dans lequel la protéine de lactosérum partiellement hydrolysée et le lipide sont combinés et séchés pour former un matériau en poudre.

12. Produit alimentaire comprenant des acides gras oméga-3 stabilisés comprenant:

une protéine de lactosérum partiellement hydrolysée possédant un degré d'hydrolyse de 26% ou plus et une activité de l'eau de 0,308 ou plus;

au moins un d'un acide gras oméga-3 comprenant l'acide docosahexaénoïque, l'acide eicosapentaénoïque ou un mélange de ceux-ci; et

ledit produit alimentaire étant stable au stockage dans des conditions de stockage de 29,4°C (85°F) et de 50% d'humidité relative pendant au moins 12 semaines.

13. Produit alimentaire selon la revendication 12, où ledit produit alimentaire comprend de 0,1 à 40 grammes de ladite protéine de lactosérum partiellement hydrolysée et de 10 à 2000 milligrammes dudit au moins un acide gras oméga-3 dans 100 grammes dudit produit alimentaire.

14. Produit alimentaire selon la revendication 12, où ledit produit alimentaire comprend au moins un parmi une céréale prête à manger, une chip, un cracker, un cookie, une barre de type granola, une barre de céréales, une farine d'avoine prête à manger, un produit de boulangerie, une pâte pour grill, une boucle de fromage cuite ou une boucle de fromage frite.

Quenching Capability vs Degree of Hydrolysis of Whey Protein Hydrolysates (pH 6, Aw 0.3)

□ cis-4-Heptenal ▣ Octyl Aldehyde □ t-2-Octenal □ 2,4-Octadienal ■ t-2-c-6-Nonadienal

**FIGURE 1**

FIGURE 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1600496 A